# EUROPEAN PATENT APPLICATION

(11) **EP 1 161 037 A2**
(43) Date of publication of application: **05.12.2001**
(21) Application number: 01113265.1
(22) Date of filing: 31.05.2001
(51) Int. Cl.: H04L 12/58

(54) **Method for messaging in portable terminals**

(30) Priority: 31.05.2000 JP 2000162867
(71) Applicant: Net Village Co., Ltd., Hachioji-shi, Tokyo (JP)
(72) Inventor: Iida, Shoichi, Kawasaki-shi, Kanagawa-ken (JP)
(74) Representative: Goddar, Heinz J., Dr.

(57) **Abstract**

A method for transmitting/receiving text data in an Internet-accessible portable terminal that permits transmitting/receiving message data without any limitation in a total number of characters contained in the message data. The portable terminal 1 is connected to a POP server 8 via a gateway server 7, in which long text data are divided into a plurality of segment data each having a data size displayable on the portable terminal 1, paging-processed, and then, transmitted to the portable terminal 1, thereby all of the long text data, not depending on a total number of characters contained, can be looked through. Also, since a plurality of text input boxes that are used to input main text data are provided, a limitation in number of characters to be input in a Web browser is resolved and permits transmission of long text data regardless of a total number of characters contained.

## Description

### Background of the Invention

### Field of the Invention

This invention relates to a method for transmitting/receiving text data in a portable terminal, and more particularly, this invention relates to a transmission/reception method of text data in a portable terminal capable of transmitting/receiving such text data without any limitation irrespective of a total number of characters contained in the text data that are transmitted/received in the portable terminal via an information communication network constituted by either a public line network or a private line network such as the Internet.

### Description of the Prior Art

In recent years, by the progress of information communication networks such as the Internet, utilization of the Internet by operating information processing apparatuses having communication functions capable of accessing the information communication networks such as personal computers has been increased. Portable terminals having functions capable of accessing the Internet are also appeared from among such portable terminals as mobile phones and PHS (Personal Handyphone System), that have been increasingly popular in these days and transmission/reception of text data in these portable terminals are frequently carried out by utilizing the Internet.

Hereinafter, a description will be made of a text data transmitting/receiving method employed in a conventional portable terminal by utilizing the Internet, in such a case that an e-mail transmission/reception is performed in the conventional portable terminal as an example.

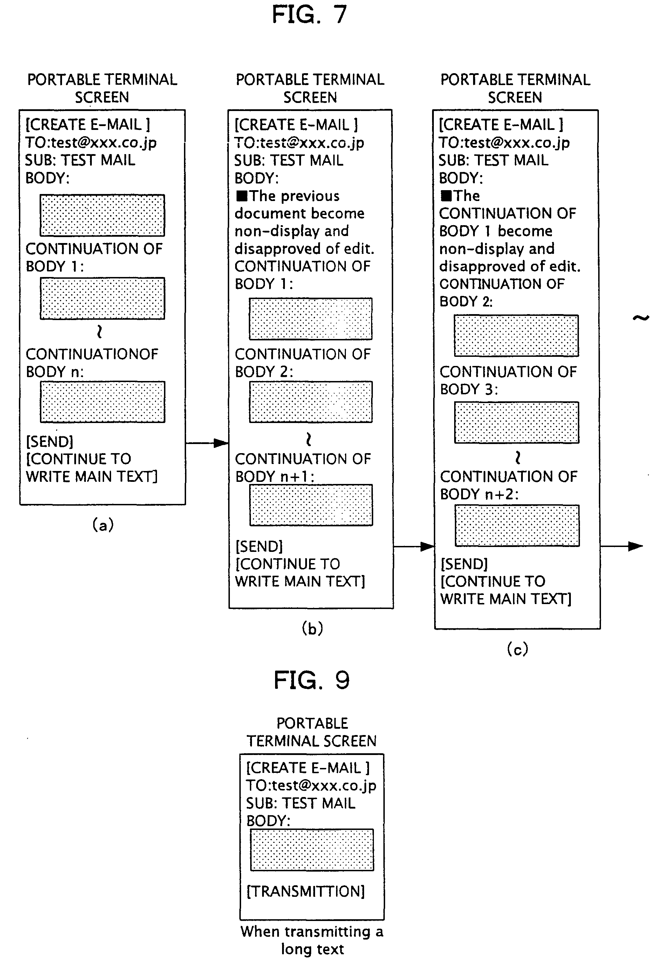

Fig. 8 is a diagram showing an example of a screen display when main text data (message data) of an e-mail is received in a conventional portable terminal. Also, Fig. 9 is a diagram showing an example of a screen display when main text data (message data) of an e-mail is transmitted in the conventional portable terminal.

Generally speaking, each conventional portable terminal has a predetermined limitation in a memory size (capacity) of a memory device for storing received message data (text data), resulting in a limitation in a size of receivablemessage data. Consequently, when message data (text data), the size of which exceeds the limitation, is received, a reception error and/or loss of message (sentences) may occur as shown in Fig. 8.

Likewise, in a conventional portable terminal (namely, an Internet-accessible portable terminal), since a character input box of a Web browser installed thereon provides a limited capability of input, a maximum number of characters to be input as message data is also limited. In the case that a main text of an e-mail to be transmitted is input in a portable terminal, it is impossible to input more than a predetermined number of characters (around 250 characters in maximum may be permitted in presently marketed portable terminals). Consequently, the size of transmittable messages is also limited, as shown in Fig. 9.

As described above, in the transmission/reception method of the text data in the conventional portable terminal, there is a disadvantage in that, when relatively long e-mail (message data) is received, loss of data may occur in the middle of the sentences and entire text could not be received due to the limitation in the size of receivable data.

Likewise, there is also a disadvantage in that, when the message data is transmitted, it is impossible either to input or to transmit an e-mail (message data) exceeding the limitation in the predetermined number of characters because a total number of characters permitted to be input into the text input box in the portable terminal is limited due to the limitation in the Web browser installed thereon.

### Summary of the Invention

Therefore, it is an object of the present invention to provide a method for transmitting/receiving text data in an Internet-accessible portable terminal capable of transmitting/receiving message data without any limitation in a total number of characters.

According to one aspect of the present invention, a text data receiving method in a portable terminal which receives text data supplied from a predetermined server provided on an information communication network via a gateway server provided on the information communication network, comprises the steps of: storing all of the text data supplied from the predetermined server into the gateway server; dividing the all of the text data stored in the gateway server into a plurality of page-segment text data by the number of characters that is allowed to be displayed on the portable terminal; and outputting the text data to the portable terminal in the form of the page-segment text data having the number of characters so divided.

Also, according to the present invention, in response to an instruction from the portable terminal, the gateway server scrolls the pages and outputs the corresponding page to the portable terminal.

According to another aspect of the present invention, a text data transmitting method in a portable terminal which transmits text data to be supplied to a predetermined server provided on an information communication network via a gateway server provided on the information communication network, comprises the steps of: providing a plurality of text input boxes with a Web browser installed on the portable terminal, and sequentially write the text data into the plurality of text input boxes; upon completion of writing of all of the text data, sequentially reading out sets of sentences made of the text data from the respective text input boxes in order of time of input; outputting the sets of sentences to the gateway server; arranging the sets of sentences sequentially read out from the text input boxes in order of time of readout; and outputting the arranged sets of sentences to the predetermined server as an uninterrupted text data.

According to the present invention, in case that a total number of characters written into the plurality of text input boxes exceeds a limitation of a total number of characters to be allowed to transmit from the portable terminal, the Web browser installed on the portable terminal performs the steps of: reading out sets of sentences most previously written into the text input box and outputting the sets of sentences to the gateway server; writing new sentences to follow into the text input box which has been emptied by the reading out; and subsequently repeating the reading out and writing until the writing of all of the text data is complete.

According to a further aspect of the present invention, a text data transmitting/receiving method in a portable terminal which transmits text data to be supplied to a predetermined server via gateway server and receives text data supplied from the predetermined server via the gateway server, the predetermined server and the gateway server being provided on an information communication network, the method including a combination of a transmitting method and a receiving method, the transmitting method comprises the steps of: providing a plurality of text input boxes with a Web browser installed on the portable terminal; sequentially writing the text data into the plurality of text input boxes; upon completion of the writing step of all of the text data, sequentially reading out sets of sentences made of the text data from the respective text input boxes in order of time of input; outputting the sets of sentences to the gateway server; arranging the sets of sentences sequentially read out from the text input boxes in order of time of read-out; and outputting the arranged sets of sentences to the predetermined server as a series of text data; the receiving method comprises the steps of: storing all of the text data supplied from the predetermined server into the gateway server; dividing the all of the text data stored in the gateway server into a plurality of page-segment text data by the number of characters allowed to be displayed on the portable terminal; outputting the text data to the portable terminal in the form of the page-segment text date having the number of characters so divided.

According to the present invention, when the text data is received, the gateway server adjusts a total number of the characters to be transmitted to the limitation of receivable characters in the portable terminal and executes a paging-process to all of the data, so that no limitation in a total number of the receivable characters in the portable terminal can be realized. Also, by providing a plurality of text input boxes used to input text data, no limitation in the total number of the transmittable characters in the Web browser can be realized.

### Brief Description of the Drawings

The invention will be explained in more detail in conjunction with appended drawings, wherein:
Fig. 1 is a block diagram showing an example of a system configuration used to realize a transmitting/receiving method of text data in a portable terminal according to the present invention;
Fig. 2 is a block diagram showing another example of the system configuration used to realize a transmitting/receiving method of text data in a portable terminal according to the present invention;
Fig. 3 is a flow chart illustrating a reception process of the text data in the portable terminal;
Fig. 4 is a diagram showing an example of screens displayed in the portable terminal while the reception process of the text data is carried out in the system shown in Fig. 1;
Fig. 5 is a flow chart illustrating a transmission process of the text data in the portable terminal;
Fig. 6 is a diagram showing an example of screens displayed in the portable terminal while the transmission process of the text data is carried out in the system shown in Fig. 1;
Fig. 7 is a diagram showing another example of screens displayed in the portable terminal while the transmission process of the text data is carried out in the system shown in Fig. 1;
Fig. 8 is a diagram showing an example of a screen displayed in the conventional portable terminal when main text data of an e-mail is received; and
Fig. 9 is a diagram showing an example of a screen displayed in the conventional portable terminal when main text data of an e-mail is transmitted.

### Detailed Description of the Preferred Embodiments

Referring to drawings, preferred embodiments of the present invention will be described below.

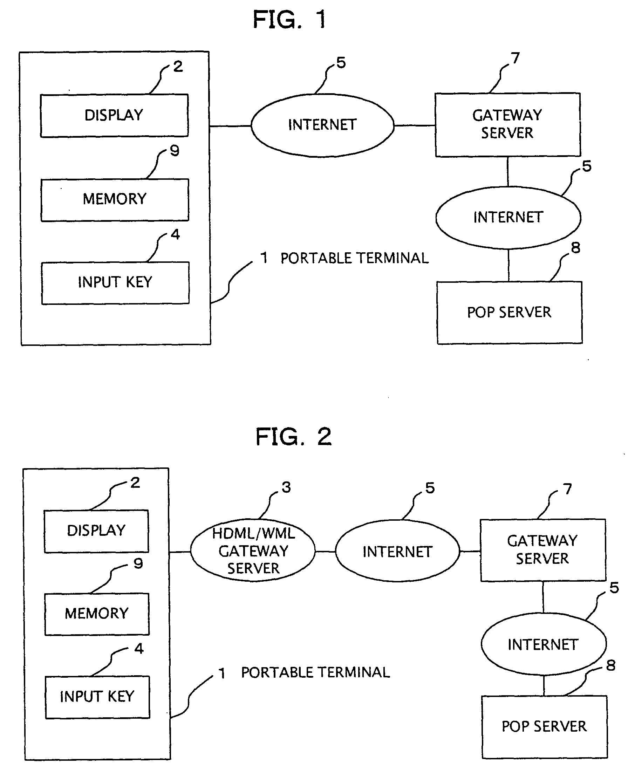

Figs.1 and 2 are block diagrams showing an example of a system configuration to realize a method for transmitting/receiving text data in a portable terminal according to the present invention.

Fig. 1 shows an example of a system configuration used in a case where a portable terminal adaptable to Compact HTML (Hyper Text Markup Language) accesses via a gateway server to a POP (Post Office Protocol) server or the like that requires user authentication. Fig. 2 shows an example of a system configuration used in a case where a portable terminal adaptable to HDML/WML (XML-based) accesses to a POP server or the like that requires user authentication via both a gateway server adaptable to HDML/WML (XML-based) and a common (adaptable to HTML) gateway server for portable terminals.

Referring to Fig. 1, a portable terminal 1 is provided with a display 2 for visually communicating various kinds of information to a user, a memory 9 for storing message data received via the Internet, and an input key 4 for inputting data. Furthermore, the portable terminal 1 is connected via the Internet 5, a gateway server 7, and again the Internet 5 to a POP server 8. It should be noted that although not shown in the drawing, the portable terminal 1 is connected to the Internet 5 via a mobile communication network that is constituted by a wireless base station (not shown) and a gateway and the like (not shown) connected to the wireless base station.

On the other hand, as showing Fig. 2, the portable terminal 1 is provided with a display 2 for visually communicating various kinds of information to a user, a memory 9 for storing message data received, and an input key 4 for inputting data. Furthermore, the portable terminal 1 is connected to a POP server 8 via an HDML/WML adaptable gateway server 3, the Internet 5, a gateway server 7, and again the Internet 5. The HDML/WML adaptable gateway server 3 performs a protocol conversion for converting either HDML or WML into HTML and the like. Similar to the case shown in Fig. 1, it should also be noted that although not shown in the drawing, the portable terminal 1 is connected to the HDML/WML adaptable gateway server 3 via a mobile communication network including a wireless base station and the like.

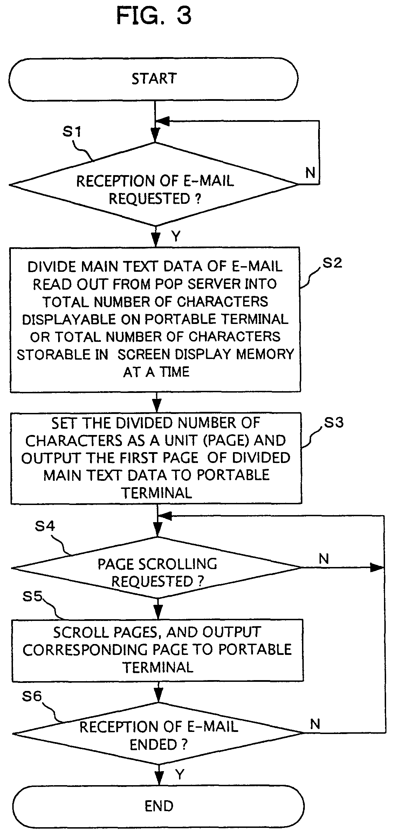

Referring now to Figs. 3 to 7, a description will be made more specifically with respect to the transmitting/receiving method of text data in a portable terminal according to the invention (namely, a transmitting/receiving method of e-mail by utilizing a Web browser installed on the portable terminal). It should be understood that, the system shown in Fig. 1 in which the portable terminal adaptable to Compact HTML accesses via the gateway server to the POP server or the like that require the user authentication is referred to as an example, and concrete description will be made hereinafter.

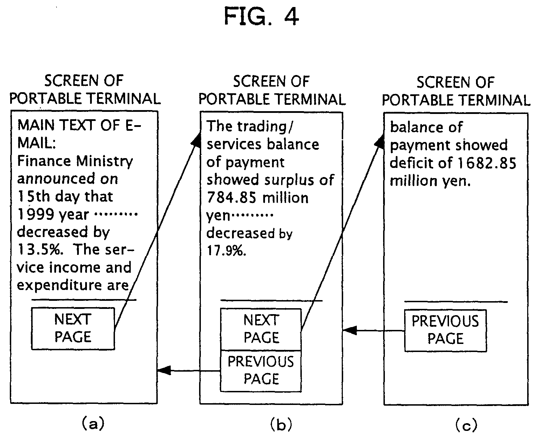

First of all, with reference to Figs. 3 and 4, a method for receiving text data in the portable terminal employed in the system shown in Fig. 1 will now be explained. Fig. 3 is a flow chart illustrating a reception process of the text data in the portable terminal. Fig. 4 is a diagram showing an example of screens displayed in the portable terminal while the reception process of the text data is carried out in the system shown in Fig. 1.

First, in response to a user's operation, the portable terminal 1 displays a screen of a received e-mail list (not shown) on the display 2. Then, a desirable e-mail is selected from the received e-mail list on the screen. In response to the selection, a request for receiving (reading out) the desirable e-mail is output from the portable terminal 1 to the POP server 8 (step S1). In response to the request, the POP server 8 outputs main text data of the designated e-mail to the gateway server 7.

The gateway server 7 which has received the main text data of the designated e-mail divides the main text data having a certain total number of characters into a plurality of text data each having a total number of characters displayable on the display 2 of the portable terminal 1 or storable in the memory 9 at a time (step S2). In the latter, the memory 9 generally has a storage capacity several times larger than data size of a total number of characters displayable on the display 2 of the portable terminal 1 at a time.

The gateway server 7 then sets these divided number of characters as one unit (page), and outputs a first page of the main text data of the e-mail to the portable terminal 1 (step S3). As a result, as shown in Fig. 4(a), the first page of the main text data of the e-mail is displayed on the display 2 of the portable terminal 1.

Next, when having finished reading the first page of the e-mail displayed on the display 2, the user selects a character (icon or the like) of either "next page" or "previous page" (in this case, the "next page" is selected) indicated on the display 2. In response to the selection, a page scrolling request is output to the gateway server 7 (step S4). The gateway server 7 scrolls the pages in response to the page scrolling request from the portable terminal 1 (i.e. the gateway server 7 outputs either previous page or next page of main text data of e-mail to the portable terminal 1) (step S5). In other words, under such a condition (of screen) as shown in Fig. 4(a), a selection of the character (icon or the like) of the "next page" switches the condition into such a condition (of screen) as shown in Fig. 4(b). Furthermore, under such a condition (of screen) as shown in Fig. 4(b), a selection of the character (icon or the like) of the "next page" switches the condition into such a condition (of screen) as shown in Fig. 4(c). While, under such a condition (of screen) as shown in Fig. 4(b), a selection of the character (icon or the like) of the "previous page" switches the condition into such a condition (of screen) as shown in Fig. 4(a).

When the user finishes reading all pages of the main text data of the e-mail, or cancels in mid flow as reading the main text data of the e-mail, in other words, when the portable terminal 1 issues a request for instructing an end of the e-mail reception, the gateway server 7 quits a series of the above-explained operations (step S6).

Besides, with respect to conditions of displaying on the display 2 respective pages of the divided text data of the e-mail, if the first page of the main text data of the e-mail is displayed, only the character (icon or the like) of the "next page" is indicated on the display 2 as shown in Fig. 4(a); if the last page of the main text data of the e-mail is displayed, only the character (icon or the like) of the "previous page" is indicated on the display 2 as shown in Fig. 4(c); and if any page other than the first page and the last page is displayed, both the characters (icon or the like) of the "next page" and the "previous page" are indicated on the display 2 as shown in Fig. 4(b).

The above embodiment was described in such a case that the main text data of the e-mail having a certain total number of characters is divided into a plurality of text data each having a total number of characters that can be displayed on the display 2 of the portable terminal 1 at a time as an example. Alternatively, in the case where the main text data of the e-mail having a certain total number of characters contained is divided into a plurality of text data each having a total number of characters that can be stored in the memory 9, it is required to scroll the screen of the display 2 of the portable terminal 1 so as to look through all of the information contained in the respective pages shown in Figs. 4(a) to 4(c).

As described above, in accordance with the method for receiving the text data in the portable terminal of the present invention, the text file, which could not be looked through due to the limitation in the receivable data capacity of the portable terminal in a conventional technique, is received via the gateway server, thereby being looked through without any limitation of the number of characters. As a result, the text data can be created by a creator (sender) without paying any special attention to the data size, and the work efficiency for the creator can be improved with respect to contents creation directed to the portable terminals. Also, by receiving the e-mail via the gateway server in which the paging process is performed to long text data, all of the long text data can be looked through by the portable terminal.

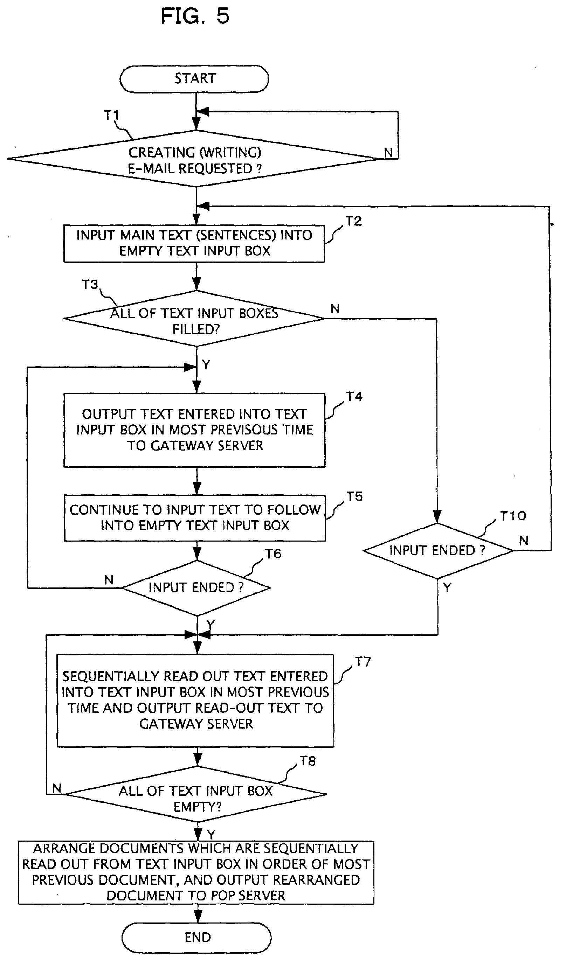

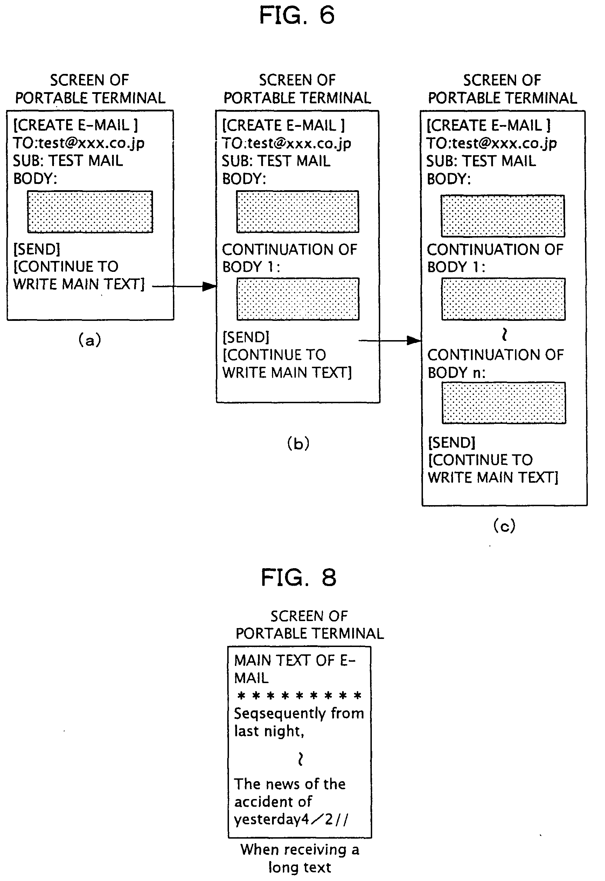

Secondly, a method for transmitting text data in the portable terminal employed in the system shown in Fig. 1 will be explained with reference to Figs . 5 to 7. Fig. 5 is a flow chart illustrating a transmission process of the text data in the portable terminal. Figs. 6 and 7 are diagrams showing an example of screens displayed in the portable terminal while the transmitting process of the text data is performed in the system shown in Fig. 1.

First, in response to a user's operation, the portable terminal 1 displays a mail creation screen as shown in Fig. 6(a) on the display 2 (step T1). Then, the user writes main text data of an e-mail in a predetermined way into an empty (yet no character entered) text input box provided by the Web browser installed on the portable terminal 1 (step T2). As the writing of the main text data of the e-mail progresses and when the written text data reaches to a predetermined number of characters allowed to be input into the text input box, the user selects a character (icon or the like) of "continue to write main text" indicated on the display 2 and continues to write the main text data of the e-mail into the next empty (no character entered) text input box, as shown in Fig. 6(b) (steps T3, T10, T2).

In this case, when the writing of all of the main text data of the e-mail is complete and a total number of the written characters of the main text data has not yet exceed the limitation of the number of characters transmittable from this portable terminal, that is to say, when the writing of the main text data is complete in such a states as shown in Figs. 6(a) to 6(c) and the character (icon or the like) of "send" indicated on the display 2 is selected, the Web browser installed on the portable terminal sequentially reads out respective text data entered into the respective text input boxes from box to box in order of time of input, and outputs the respective text data to the gateway server 7 (steps T3, T10, T7).

Then, when all of the text data entered into the text input boxes are read out and output to the gateway server 7 and all of the text input boxes become empty (step T8), the gateway server 7 arranges the text data that have been sequentially read out from the text input boxes in order of time of input, and outputs a series of all arranged main text data of e-mail to the POP server 8 (step T9). The POP server 8 performs a transmission of the e-mail as an SMTP (Simple Mail Transfer Protocol) server.

On the other hand, in such a case that, as the writing of the main text data of the e-mail progresses and when a total number of the written characters exceeds the limitation of the number of characters transmittable from the portable terminal, that is to say, when the writing of the main text data of the e-mail continues beyond such a state as shown in Fig. 7(a), the Web browser installed on the portable terminal reads out the text data entered into the text input box in the most previous time, and outputs the text data to the gateway server 7 (steps T3, T4). Then, the entry of text to follow is made by the Web browser into the empty (no character entered) text input box that has been emptied by the read-out of the previous text data (step T5). Subsequently, a series of the above-described process (from step T4 via steps T5 and T6 to step T4) is repeatedly carried out as shown in Fig. 7(c), until the writing of all of the main text data of the e-mail is complete.

Thereafter, when the writing of all of the main text data of the e-mail is complete and, such a case that the character (icon or the like) of "send" indicated on the display 2 is selected, the Web browser installed on the portable terminal sequentially reads out the text data entered into the text input box into which entry of the most previously written text has been made, and outputs the text data to the gateway server 7 (steps T6, T7).

Then, when all of the written text data are read out from all of the text input boxes and output to the gateway server 7 and all of the text input boxes become empty (step T8), the gateway server 7 arranges the text data which have been sequentially read out from the text input boxes in order of time of input and outputs the arranged text data as an uninterrupted main text data of an e-mail to the POP server 8 (step T9). The POP server 8 performs a transmission of the e-mail as an SMTP server. Furthermore, when the process from the step T3 to the step T6 is carried out, the respective text data are read out from the respective text input boxes as respective unit, and a control code is added to an end of each of the text data which will be output to the gateway server 7.
The control code is used not only to arrange the text data that have been sequentially read out from the respective text input boxes in order of time of input and reconstruct an uninterrupted main text data of the e-mail in the gateway server 7 but also to reedit the text data having been transmitted from the portable terminal 1 to the gateway server 7.

As described above, the present invention makes it possible to increase a total number of transmittable characters, by successively providing a new text input box which will be used to input new text data to follow each time of selection of the command "continue to write main text" as shown in Fig. 6.

Also, since a plurality of text input boxes used to input main text data of an e-mail are provided, it is possible to solve the problem of the limitation in the number of characters to be input in the Web browser. That is to say, by selecting a command "continue to write main text", a new text input box is displayed thereby making it possible to input new text data to follow.

Furthermore, in case that a total number of characters contained in main text data of an e-mail exceeds a data transmission capacity of a portable terminal, a content of the text input box into which most previous entry of text was made is concealed and prohibited from editing thereby making it possible to input a new text to follow.

As described above, according to the present invention, since the text data can be input/transmitted without any limitation, a mailing function equivalent to those of mailers for general-purpose personal computers can be realized on the portable terminal. To the contrary, a conventional mailer on a portable terminal has a limitation in a total number of transmittable characters due to the capacity of the receivable data and the various kinds of limitations in the Web browser installed on the portable terminal.

It goes without saying that although the above description was made as the data to be transmitted/received in the portable terminal via the Internet are the text data, the present invention may be apparently applied to such a document as is written in Compact HTML, HDML, WML, and the like, or applied to image data.

As explained above, according to the transmitting/receiving method of the text data in the portable terminal according to the present invention, main text data received from a predetermined server are divided into a plurality of segment text data each having a data size displayable on the portable terminal and output to the portable terminal by a gateway server. Accordingly, even the substantially long main text data can be looked through on the portable terminal regardless of a total number of characters contained.

Also, since a plurality of text input boxes used to input main text data are provided, the problem of the limitation in the number of characters to be input in a Web browser can be solved. Accordingly, it is possible to realize a mailing function in the portable terminal, which is equivalent to that of mailers for general-purpose personal computers, thereby making it possible to transmit substantially long mail data regardless of a total number of characters contained.

The preferred embodiment of the present invention has been disclosed by way of example and it will be understood that other modifications may occur to those skilled in the art without departing from the scope and the spirit of the appended claims.

The features disclosed in the foregoing description, in the claims and/or in the accompanying drawings may, both separately and in any combination thereof, be material for realising the invention in diverse forms thereof.

## Claims

1. A text data receiving method in a portable terminal which receives text data supplied from a predetermined server provided on an information communication network via a gateway server provided on said information communication network, comprising the steps of:
storing all of the text data supplied from said predetermined server into said gateway server;
dividing said all of the text data stored in the gateway server into a plurality of page-segment text data by the number of characters that is allowed to be displayed on said portable terminal; and
outputting said text data to said portable terminal in the form of said page-segment text data having the number of characters so divided.

2. A text data receiving method in a portable terminal according to claim 1 wherein:
in response to an instruction from said portable terminal, said gateway server scrolls the pages and outputs the corresponding page to said portable terminal.

3. A text data transmitting method in a portable terminal which transmits text data to be supplied to a predetermined server provided on an information communication network via a gateway server provided on said information communication network, comprising the steps of:
providing a plurality of text input boxes with a Web browser installed on the portable terminal, and sequentially write the text data into said plurality of text input boxes;
upon completion of writing of all of the text data, sequentially reading out sets of sentences made of said text data from said respective text input boxes in order of time of input;
outputting the sets of sentences to said gateway server;
arranging the sets of sentences sequentially read out from said text input boxes in order of time of readout; and
outputting the arranged sets of sentences to said predetermined server as an uninterrupted text data.

4. A text data transmitting method in a portable terminal according to claim 3 wherein:
in case that a total number of characters written into said plurality of text input boxes exceeds a limitation of a total number of characters to be allowed to transmit from said portable terminal, the Web browser installed on said portable terminal performs the steps of: reading out sets of sentences most previously written into the text input box and outputting the sets of sentences to said gateway server; writing new sentences to follow into the text input box which has been emptied by said reading out; and subsequently repeating said reading out and writing until the writing of all of the text data is complete.

5. A text data transmitting/receiving method in a portable terminal which transmits text data to be supplied to a predetermined server via gateway server and receives text data supplied from said predetermined server via said gateway server, said predetermined server and said gateway server being provided on an information communication network, the method including a combination of a transmitting method and a receiving method, the transmitting method comprising the steps of:
providing a plurality of text input boxes with a Web browser installed on the portable terminal;
sequentially writing the text data into said plurality of text input boxes;
upon completion of the writing step of all of the text data, sequentially reading out sets of sentences made of said text data from said respective text input boxes in order of time of input;
outputting the sets of sentences to said gateway server;
arranging the sets of sentences sequentially read out from said text input boxes in order of time of read-out; and
outputting the arranged sets of sentences to said predetermined server as a series of text data;
the receiving method comprising the steps of:
storing all of the text data supplied from said predetermined server into said gateway server;
dividing said all of the text data stored in the gateway server into a plurality of page-segment text data by the number of characters allowed to be displayed on said portable terminal;
outputting said text data to said portable terminal in the form of said page-segment text date having the number of characters so divided.

6. A text date transmitting/receiving method in a portable terminal according to claim 5 wherein:
in response to an instruction from said portable terminal, said gateway server scrolls the pages and outputs the corresponding page to said portable terminal.

7. A text date transmitting/receiving method in a portable terminal according to claim 5 wherein:
in case that a total number of characters written into said plurality of text input boxes exceeds a limitation of a total number of characters to be allowed to transmit from said portable terminal, the Web browser installed on said portable terminal performs the steps of:
reading out sets of sentences most previously written into the text input box and outputting the sets of sentences to said gateway server;
writing new sentences to follow into the text box which has been emptied by said read out; and
subsequently repeating said reading out and writing until the writing of all the text data is complete.
